# FASCICULE DE BREVET EUROPEEN

(11) **EP 2 678 179 B1**
(45) Date de publication et mention de la délivrance du brevet: **10.01.2018**
(21) Numéro de dépôt: 12704290.1
(22) Date de dépôt: 17.02.2012
(51) Int. Cl.: B60K 6/48, B60K 6/12, B60K 6/00

(54) **VEHICULE AUTOMOBILE A TROIS MOTEURS ELECTRIQUE, HYDRAULIQUE ET THERMIQUE ET PROCEDE DE GESTION DES ENERGIES STOCKEES A BORD**
KRAFTFAHRZEUG MIT DREI MOTOREN, EINEM ELEKTROMOTOR, HYDRAULIKMOTOR UND EINER WÄRMEKRAFTMASCHINE, UND VERFAHREN ZUR VERWALTUNG DER AN BORD GESPEICHERTEN ENERGIE
MOTOR VEHICLE HAVING THREE MOTORS, I.E. AN ELECTRIC MOTOR, A HYDRAULIC MOTOR, AND A HEAT ENGINE, AND METHOD FOR MANAGING THE ENERGY STORED ONBOARD

(30) Priorité: 22.02.2011 FR 1100528
(43) Date de publication de la demande: 01.01.2014
(73) Titulaire: Chêne, Richard, 92200 Neuilly (FR); Delamour, Dominique, 78490 Les Mesnuls (FR); Miklitarian, Alain, 75014 Paris (FR); Rodi, Olivier, 78950 Gambais (FR); Societe Albigeoise de Fabrication et de Reparation Automobile SAFRA, 81000 Albi (FR)
(72) Inventeur: CHENE, Richard, 92200 Neuilly (FR); DELAMOUR, Dominique, 78490 Les Mesnuls (FR); MIKLITARIAN, Alain, 75014 Paris (FR); RODI, Olivier, 78950 Gambais (FR)
(74) Mandataire: Argyma
(86) Numéro de dépôt international: PCT/EP2012/052817
(87) Numéro de publication internationale: WO 2012/113736

(56) Documents cités:
- EP-A1- 2 065 282
- WO-A2-2008/072044
- DE-A1-102009 016 673
- US-B1- 6 170 587

## Description

Le domaine de l'invention est celui des véhicules automobiles terrestres, de transport aussi bien de marchandises que de personnes, aussi bien de voitures particulières que de véhicules de transport public.

Un véhicule automobile monté sur roues comporte donc des trains de roues dont l'entraînement en rotation est assuré, par l'intermédiaire d'un arbre de transmission et de ponts ou essieux, par un ensemble moteur. Différentes sources d'énergie pour faire fonctionner l'ensemble moteur sont possibles. La plus courante est l'énergie fossile que constitue le combustible essence ou gasoil, pour les moteurs thermiques à combustion interne. On peut également faire appel, pour les moteurs électriques, à l'énergie électrique stockée dans des batteries ou des « supercapacités ». Enfin, on peut exploiter, pour les moteurs hydrauliques, un liquide (généralement de l'huile) sous pression contenu dans une bouteille de stockage de cette énergie hydraulique. Les batteries et supercapacités sont des dispositifs rechargeables. De même, les bouteilles de liquide peuvent aussi être rechargées, par un moteur hydraulique fonctionnant en pompe ou par une pompe séparée.

Il faut ici clairement souligner qu'un moteur thermique peut aussi bien servir à entraîner les roues qu'à recharger les récipients de stockage d'énergie, c'est-à-dire les batteries, les supercapacités ou les bouteilles de liquide. Dans le premier cas, on dit qu'il est branché en parallèle, dans le second cas, en série.

Comme batteries de stockage d'énergie électrique, on considère souvent les batteries au plomb ou au cadmiun-nickel. Mais elles sont très lourdes et volumineuses. De surcroît, comme la quantité d'énergie stockée est difficile à connaître, on a souvent tendance à surévaluer le stockage, ce qui dégrade le rendement énergétique des véhicules. Le tout engendre un coût d'exploitation des véhicules à moteur électrique qui est excessif.

Les supercapacités sont beaucoup plus légères et plus petites, mais elles se déchargent très vite et sont très chères. Sans moteur thermique (groupe électrogène) série, leur exploitation est difficilement envisageable.

En tout état de cause, recharger un récipient de stockage d'énergie électrique n'est pas simple alors que recharger une bouteille de liquide est facile.

Des motorisations hybrides ont déjà été proposées.

Avec un moteur thermique assisté par un moteur électrique, si le moteur électrique est suffisamment puissant, on peut faire démarrer un véhicule et l'entraîner à vitesse lente avec le moteur électrique. Ce type de motorisation hybride est également intéressant lors des phases de freinage pendant lesquelles on peut utiliser le moteur électrique en générateur.

Certains constructeurs ont déjà équipé des véhicules d'un ensemble d'un moteur thermique et d'un moteur/pompe hydraulique. Le moteur hydraulique est performant au démarrage, sans parler de son efficace récupération d'énergie, comme souligné plus haut.

Enfin, une hybridation thermique/hydraulique a pu aussi être envisagée, mais certainement de façon on ne peut plus discrète.

Les limites de l'hybridation thermique/électrique sont claires. Eh bien les demandeurs ont eu l'idée, pour dépasser ces limites et résoudre le problème de la recharge des récipients de stockage électrique, de combiner l'hybridation thermique/électrique et l'hybridation thermique /hydraulique en une hybridation plus poussée qu'on peut qualifier de tri-hybridation. Le brevet US 6,170,587 décrit un véhicule automobile terrestre comportant un moteur électrique d'entraînement du véhicule et des moyens de stockage d'énergie électrique y associés, un moteur hydraulique d'entraînement du véhicule et des moyens de stockage d'énergie hydraulique y associés et un moteur thermique, avec des moyens de stockage d'énergie fossile, et qui est agencé pour être monté en série et recharger les moyens de stockage d'énergie hydraulique ou les moyens de stockage d'énergie électrique associés au moteur électrique d'entraînement.

Ainsi, la présente demande concerne tout d'abord un véhicule automobile terrestre selon la revendication 1. L'invention est remarquable à plus d'un titre. Tout d'abord, le véhicule comporte un ensemble moteur fonctionnant avec trois sources d'énergie différentes (fossile, électrique et thermique). Ensuite, compte-tenu de la similitude entre le stockage électrique et le stockage hydraulique, il n'y avait pas de raison de vouloir hybrider les deux. Grâce à cela, qui est un gage d'activité inventive, on peut éviter d'avoir à recharger les moyens de stockage d'énergie électrique pendant les déplacements, pour réserver la recharge à l'arrêt, au poste dédié ou au garage, résolvant ainsi le problème de la difficulté de cette recharge à bord du véhicule Selon l'invention, le moteur thermique est agencé pour être monté aussi en parallèle en moteur d'entraînement du véhicule.

Dans ce cas, le fonctionnement du véhicule peut avantageusement être le suivant.

Le véhicule démarre avec le moteur hydraulique, parfaitement adapté aux besoins et avec un rendement supérieur à toute autre motorisation à basse vitesse.

Dés que le véhicule est lancé, le moteur électrique entre en action : il accompagne puis remplace la traction hydraulique au fur et à mesure que la vitesse augmente.

Le fonctionnement reste adapté et l'efficacité du moteur électrique est totale avec une dissipation thermique très faible.

A plein régime, le moteur thermique peut à son tour accompagner le moteur électrique, voire le remplacer totalement.

Avantageusement, le moteur hydraulique est un moteur-pompe - il pourrait aussi être associé à une pompe - et le moteur électrique est un moteur-générateur.

L'invention concerne également un procédé de gestion des énergies stockées à bord d'un véhicule automobile terrestre selon la revendication 6. Avantageusement, le moteur thermique peut recharger des moyens de stockage d'énergie électrique d'un moteur électrique auxiliaire de fonctionnement du véhicule.

Avantageusement encore, quand on ralentit le véhicule, on fait fonctionner le moteur hydraulique, s'il s'agit d'un moteur-pompe, en pompe qui recharge les moyens de stockage d'énergie hydraulique tout en freinant le véhicule. Si le moteur hydraulique est associé à une pompe, on fait fonctionner la pompe qui recharge les moyens de stockage d'énergie hydraulique tout en freinant le véhicule.

L'invention sera mieux comprise à l'aide de la description qui va suivre du véhicule trihybride et du procédé de gestion des énergies du véhicule de l'invention, en référence au dessin en annexe, sur lequel
- la figure 1 est un schéma fonctionnel du véhicule ;
- les figures 2A-2H sont des schémas illustrant huit fonctionnements du véhicule et
- la figure 3 est un diagramme de l'évolution d'un fonctionnement classique possible du véhicule.

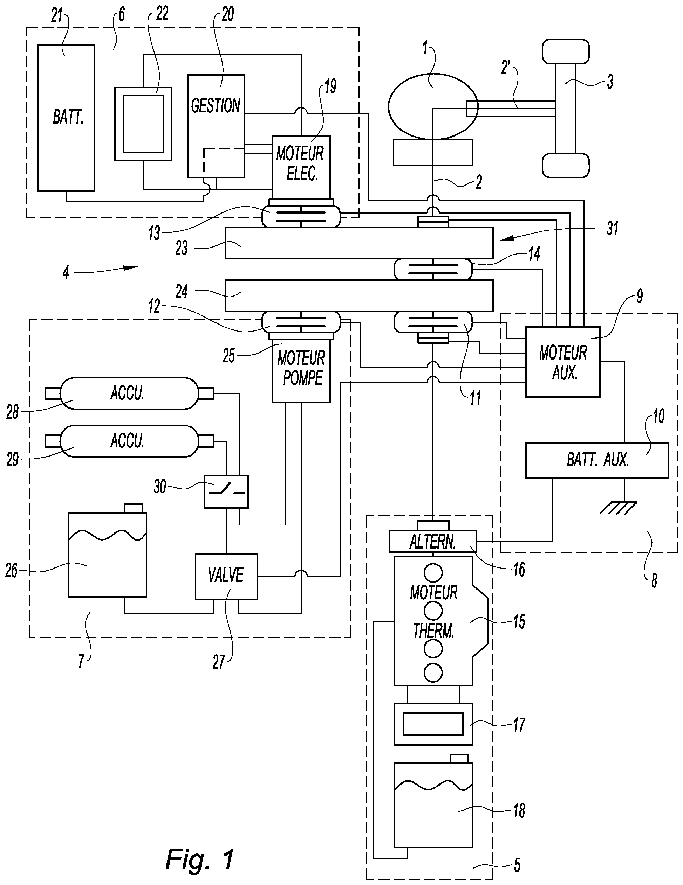

En référence à la figure 1, on a représenté du véhicule de l'invention l'un de ses ponts 1 destiné, par l'intermédiaire d'un arbre de transmission 2, à entraîner en rotation un train de roues 3. Le pont 1 est lui-même commandé par l'arbre de transmission 2 et un ensemble moteur 4 comportant un sous-ensemble thermique 5, un sous-ensemble électrique 6 et un sous-ensemble hydraulique 7.

Le moteur comporte encore un sous-ensemble électrique auxiliaire 8 de fonctionnement des différents organes du véhicule, comportant un moteur auxiliaire 9 et une batterie auxiliaire 10, ici de 24v.

La traction du véhicule peut-être assurée par le sous-ensemble thermique 5 par l'intermédiaire d'un embrayage 11, par le sous-ensemble hydraulique 7, par l'intermédiaire d'un embrayage 12 et, par le sous-ensemble électrique 6, par l'intermédiaire d'un embrayage 13. Les embrayages 11, 12 et 13 sont alimentés par le moteur auxiliaire 9. Le pont 1 est relié aux embrayages 11, 12 par un embrayage intermédiaire 14 également alimenté par le moteur auxiliaire 9. L'arbre 2 est relié aux embrayages 13, 14 par une boîte de vitesses 23 et aux embrayages 11, 12, par la boîte 23, l'embrayage 14 et une deuxième boîte de vitesses 24.

### Le sous-ensemble moteur thermique 5

Il comporte, de façon classique, un moteur thermique de traction 15 avec, en sortie de moteur, un alternateur 16 pour recharger la batterie auxiliaire 10, un circuit 17 de refroidissement du moteur et un réservoir à combustible fossile 18.

### Le sous-ensemble moteur électrique 6

Il comporte, de façon classique, un moteur électrique 19, un bloc de gestion 20, une batterie de stockage d'énergie électrique 21, contrôlée par le bloc de gestion 20 et un circuit 22 de refroidissement du moteur, alimenté par le moteur auxiliaire 9.

### Le sous-ensemble moteur hydraulique 7

Il comporte un moteur hydraulique 25, qui est ici un moteur-pompe, un réservoir d'huile 26 avec, entre les deux, une valve principale 27. Il est prévu ici deux bouteilles 28, 29 de stockage d'énergie hydraulique, en l'occurrence des accumulateurs hydrauliques, avec, entre eux et la valve 27, un commutateur 30.

L'ensemble des boîtes 23, 24 et des embrayages 11-14 constitue une unité axiale à piston 31.

L'ensemble moteur du véhicule ayant été décrit dans ses principaux organes, abordons maintenant son fonctionnement.

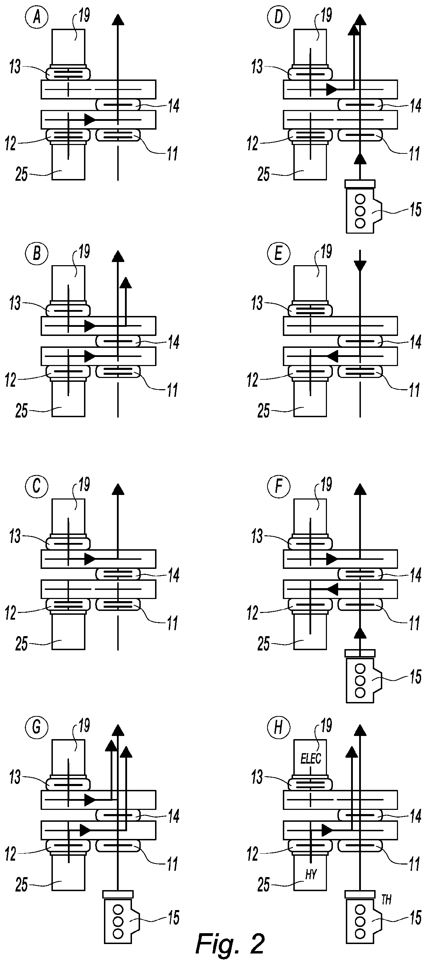

En référence à la figure 2A, le véhicule démarre avec le moteur hydraulique 25, dont le rendement, à basse vitesse, est le meilleur. Les embrayages 12 et 14 sont embrayés, les embrayages 11 et 13 au repos. Au terme de cette phase de démarrage, la vitesse du véhicule peut atteindre 20 à 25 km/h.

En référence à la figure 2B, le véhicule ayant été lancé, le moteur électrique 19 entre en action pour accompagner la traction du moteur hydraulique 25. Tous les embrayages (12, 13, 14) sont embrayés, sauf l'embrayage 11 du moteur thermique. Le véhicule peut continuer de rouler à une vitesse de 20 à 25 km/h.

En référence à la figure 2C, la vitesse ayant bien augmenté, le moteur électrique 19 remplace le moteur hydraulique 25. Tous les embrayages (11, 12, 14) sont au repos, sauf l'embrayage 13 du moteur hydraulique. Le véhicule peut rouler à une vitesse de 50 à 55km/h.

En référence à la figure 2D, le moteur 4 est à plein régime et le moteur thermique 15 accompagne le moteur électrique 19. Tous les embrayages (11, 13, 14) sont embrayés, sauf l'embrayage 12 du moteur hydraulique 25. Le véhicule peut rouler à une vitesse de 70km/h.

En référence à la figure 2E, en cas de ralentissement, le moteur hydraulique 25 fonctionne en pompe pour recharger les accumulateurs 28, 29 tout en freinant le véhicule. Les embrayages 12 et 14 sont embrayés, les deux autres 11, 13 au repos.

En référence à la figure 2F, la traction du véhicule est assurée par le moteur électrique 19, avec l'embrayage 13 embrayé. Le moteur thermique 15 est utilisé pour recharger les accumulateurs 28, 29 ; dans ce cas, on dit que le moteur thermique est branché en série. Tous les embrayages (11, 12, 13) sont embrayés, sauf l'embrayage intermédiaire 14.

On notera que le moteur thermique 15 branché en série ne peut recharger que les accumulateurs hydrauliques 28, 29 et non la batterie électrique 21 du moteur électrique de traction 19.

En référence à la figure 2G la traction du véhicule est trihybride et assurée par les trois moteurs hydraulique 25, électrique 19 et thermique 15.Tous les embrayages 11-14 sont embrayés.

Enfin, en référence à la figure 2H, la traction du véhicule est assurée par le moteur hydraulique 25 et le moteur thermique 15. Tous les embrayages (11, 12, 14) sont embrayés, sauf l'embrayage 13 du moteur électrique 19.

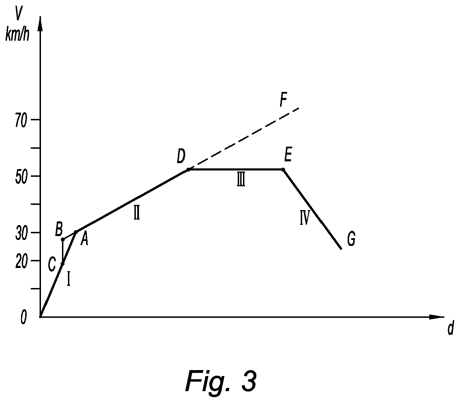

La figure 3 représente le diagramme de la vitesse du véhicule, en km/h, en fonction de la distance d parcourue, selon un fonctionnement relativement classique.

La phase I (OA) est une phase de démarrage hydraulique, avec le moteur 25. A la fin de cette phase (CA), avant qu'elle ne se termine, on lance le moteur électrique 19 (BA) alors que le véhicule roule à environ 20km/h. Quand la vitesse a atteint 30km/h (A), la traction se poursuit avec le seul moteur électrique 19 (AD), jusqu'à ce que la vitesse atteigne environ 50km/h (D). Si on veut continuer d'augmenter la vitesse, on peut substituer à la traction électrique la traction du seul moteur thermique 15 (DF). Dans ce cas, on économise la batterie 21 du moteur électrique 19. Sinon, dans le cas d'une phase III à vitesse constante (DE), on assure la traction et par le moteur électrique 19 et par le moteur thermique 15.
Si la vitesse du palier DE est suffisante, quand, au cours du déplacement du véhicule, on ralentit en phase IV (EG), la recharge des accumulateurs 28, 29 est satisfaisante. Mais si cette vitesse de palier est trop faible, la récupération de la charge des accumulateurs en ralentissement n'est plus assurée et, dans ce cas, on procède à la recharge de ces accumulateurs par le moteur thermique15.

## Revendications

1. Véhicule automobile terrestre comportant :
a. un moteur électrique (19) d'entraînement du véhicule et des moyens (21) de stockage d'énergie électrique y associés,
b. un moteur hydraulique (25) d'entraînement du véhicule et des moyens (28, 29) de stockage d'énergie hydraulique y associés et
c. un moteur thermique (15), avec des moyens (18) de stockage d'énergie fossile,
d. un premier embrayage (11), un deuxième embrayage (12) et un troisième embrayage (13) reliant respectivement l'arbre de transmission du véhicule (2) aux moteurs thermique (19) hydraulique (25) et électrique (15)
e. une première boite de vitesse (23) reliant l'arbre de transmission du véhicule (2) au troisième embrayage (11) de manière à permettre un entraînement dudit arbre de transmission (2) par le moteur électrique (19),
f. une deuxième boite de vitesse (24) reliant le premier embrayage (11) et le deuxième embrayage (12) de manière à permettre un montage en série du moteur thermique (15) avec les moyens (28, 29) de stockage d'énergie hydraulique afin de les recharger
g. un quatrième embrayage (14), reliant la première boite de vitesse (23) et la deuxième boite de vitesse (24), configuré pour, à l'état débrayé, permettre une recharge des moyens (28, 29) de stockage d'énergie hydraulique par le moteur thermique (15), au cours des déplacements du véhicule, sans recharger les moyens de stockage d'énergie électrique (21).

2. Véhicule selon la revendication 1, dans lequel le moteur thermique (15) est agencé pour être monté aussi en parallèle en moteur d'entraînement du véhicule.

3. Véhicule selon la revendication 1, dans lequel les trois embrayages (11-13) forment, avec le quatrième embrayage intermédiaire (14) et les deux boîtes de vitesses (23, 24), une unité axiale à piston (31).

4. Véhicule selon l'une des revendications 1 à 3, dans lequel le moteur hydraulique (25) est un moteur-pompe.

5. Véhicule selon l'une des revendications 1 à 4, dans lequel le moteur électrique (19), est un moteur-générateur.

6. Procédé de gestion des énergies stockées à bord d'un véhicule automobile terrestre comportant un moteur électrique (19) d'entraînement du véhicule et des moyens (21) de stockage d'énergie électrique y associés, un moteur hydraulique (25) d'entraînement du véhicule et des moyens (28, 29) de stockage d'énergie hydraulique y associés et un moteur thermique (15), avec des moyens (18) de stockage d'énergie fossile, procédé selon lequel, au cours des déplacements du véhicule, les moyens (21) de stockage d'énergie électrique du moteur électrique (19) d'entraînement ne sont pas rechargés par le moteur thermique (15), pour réserver la recharge des moyens de stockage d'énergie électrique du moteur électrique à l'arrêt, au poste dédié ou au garage, le moteur thermique (15) pouvant recharger les moyens (28, 29) de stockage d'énergie hydraulique du moteur hydraulique d'entraînement (25).

7. Procédé selon la revendication 6, selon lequel, le moteur hydraulique (25) étant un moteur-pompe, quand on ralentit le véhicule, on fait fonctionner le moteur hydraulique (25) en pompe qui recharge les moyens (28, 29) de stockage d'énergie hydraulique tout en freinant le véhicule (8).

8. Procédé selon la revendication 6, selon lequel, le moteur hydraulique étant associé à une pompe, on fait fonctionner la pompe qui recharge les moyens de stockage d'énergie hydraulique (28, 29) tout en freinant le véhicule.

## Patentansprüche

1. Terrestrisches Kraftfahrzeug, aufweisend:
a. einen Elektro-Antriebsmotor (19) des Fahrzeugs und dort zugeordnete Speichermittel (21) elektrischer Energie,
b. einen Hydraulik-Antriebsmotor (25) des Fahrzeugs und dort zugeordnete Speichermittel (28, 29) hydraulischer Energie, und
c. eine Wärmekraftmaschine (15) mit Speichermitteln (18) fossiler Energie,
d. eine erste Kupplung (11), eine zweite Kupplung (12) und eine dritte Kupplung (13), die die Antriebswelle des Fahrzeugs (2) jeweils mit der Wärmekraftmaschine (15), dem Hydraulikmotor (25) und dem Elektromotor (19) verbindet,
e. ein erstes Getriebe (23), das die Antriebswelle des Fahrzeugs (2) mit der dritten Kupplung (11) derart verbindet, dass ein Antrieb der Antriebswelle (2) durch den Elektromotor (19) möglich ist,
f. ein zweites Getriebe (24), das die erste Kupplung (11) und die zweite Kupplung (12) derart verbindet, dass eine Montage der Wärmekraftmaschine (15) in Reihe mit den Speichermitteln (28, 29) hydraulischer Energie möglich ist, um sie aufzuladen,
g. eine das erste Getriebe (23) und das zweite Getriebe (24) verbindende vierte Kupplung (14), die konfiguriert ist, um im ausgekuppelten Zustand ein Aufladen der Speichermittel (28, 29) hydraulischer Energie durch die Wärmekraftmaschine (15) während der Fortbewegungen des Fahrzeugs zu ermöglichen, ohne die Speichermittel (21) elektrischer Energie aufzuladen.

2. Fahrzeug nach Anspruch 1, wobei die Wärmekraftmaschine (15) ausgebildet ist, um auch parallel zum Antriebsmotor des Fahrzeugs montiert zu sein.

3. Fahrzeug nach Anspruch 1, wobei die drei Kupplungen (11-13) mit der vierten Übergangskupplung (14) und den zwei Getrieben (23, 24) eine axiale Einheit mit Kolben (31) bilden.

4. Fahrzeug nach einem der Ansprüche 1 bis 3, wobei der Hydraulikmotor (25) ein Pumpenmotor ist.

5. Fahrzeug nach einem der Ansprüche 1 bis 4, wobei der Elektromotor (19) ein Generatormotor ist.

6. Verfahren zur Verwaltung der an Bord eines terrestrischen Kraftfahrzeugs gespeicherten Energien, aufweisend einen Elektro-Antriebsmotor (19) des Fahrzeugs und dort zugeordnete Speichermittel (21) elektrischer Energie, einen Hydraulik-Antriebsmotor (25) des Fahrzeugs und dort zugeordnete Speichermittel (28, 29) hydraulischer Energie und eine Wärmekraftmaschine (15) mit Speichermitteln (18) fossiler Energie, wobei bei dem Verfahren die Speichermittel (21) elektrischer Energie des Elektro-Antriebsmotors (19) von der Wärmekraftmaschine (15) während der Fortbewegungen des Fahrzeugs nicht aufgeladen werden, um das Aufladen der Speichermittel elektrischer Energie des Elektromotors dem Halten an der Spezialstation oder in der Garage vorzubehalten, wobei die Wärmekraftmaschine (15) die Speichermittel (28, 29) hydraulischer Energie des Hydraulik-Antriebsmotors (25) aufladen kann.

7. Verfahren nach Anspruch 6, wobei, wenn der Hydraulikmotor (25) ein Pumpenmotor ist, der Hydraulikmotor (25) beim Verlangsamen des Fahrzeugs als Pumpe arbeitet, die die Speichermittel (28, 29) hydraulischer Energie beim Bremsen des Fahrzeugs (8) auflädt.

8. Verfahren nach Anspruch 6, wobei, wenn der Hydraulikmotor einer Pumpe zugeordnet ist, die Pumpe in Gang gesetzt wird, die die Speichermittel (28, 29) hydraulischer Energie beim Bremsen des Fahrzeugs auflädt.

## Claims

1. Terrestrial motor vehicle comprising:
a. an electric motor (19) driving the vehicle and electrical energy storage means (21) associated therewith,
b. a hydraulic motor (25) driving the vehicle and hydraulic energy storage means (28, 29) associated therewith, and
c. a combustion engine (15), with fossil energy storage means (18),
d. a first clutch (11), a second clutch (12) and a third clutch (13) respectively connecting the vehicle transmission shaft (2) to the combustion engine (15) and the hydraulic (25) and electric (19) motors,
e. a first gearbox (23) connecting the vehicle transmission shaft (2) to the third clutch (11) so as to enable said transmission shaft (2) to be driven by the electric motor (19),
f. a second gearbox (24) connecting the first clutch (11) and the second clutch (12) so as to enable the combustion engine (15) to be mounted in series with the hydraulic energy storage means (28, 29) in order to recharge them,
g. a fourth clutch (14), connecting the first gearbox (23) and the second gearbox (24), configured so as, in the declutched state, to enable the hydraulic energy storage means (28, 29) to be recharged by the combustion engine (15), during movements of the vehicle, without recharging the electrical energy storage means (21).

2. Vehicle according to claim 1, in which the combustion engine (15) is arranged so as also to be mounted in parallel as the engine driving the vehicle.

3. Vehicle according to claim 1, in which the three clutches (11-13) form, with the fourth intermediate clutch (14) and the two gearboxes (23, 24), an axial unit with piston (31).

4. Vehicle according to any of claims 1 to 3, in which the hydraulic motor (25) is a pump motor.

5. Vehicle according to any of claims 1 to 4, in which the electric motor (19) is a generator motor.

6. Method for managing the energies stored on board a terrestrial motor vehicle comprising an electric motor (19) driving the vehicle and electrical energy storage means (21) associated therewith, a hydraulic motor (25) driving the vehicle and hydraulic energy storage means (28, 29) associated therewith and a combustion engine (15), with fossil energy storage means (18), a method according to which, during movements of the vehicle, the electrical energy storage means (21) of the driving electric motor (19) are not recharged by the combustion engine (15), in order to reserve the recharging of the electrical energy storage means of the electric motor when stopped, at the dedicated station or at the garage, the combustion engine (15) being able to recharge the hydraulic energy storage means (28, 29) of the driving hydraulic motor (25).

7. Method according to claim 6, according to which, the hydraulic motor (25) being a pump motor, when the vehicle slows down the hydraulic motor (25) is operated as a pump that recharges the hydraulic energy storage means (28, 29) while braking the vehicle (8).

8. Method according to claim 6, according to which, the hydraulic motor being associated with a pump, the pump is operated, which recharges the hydraulic energy storage means (28, 29) while braking the vehicle.
